# EUROPÄISCHE PATENTSCHRIFT

(11) **EP 2 724 351 B1**
(45) Veröffentlichungstag und Bekanntmachung des Hinweises auf die Patenterteilung: **21.11.2018**
(21) Anmeldenummer: 12738083.0
(22) Anmeldetag: 13.07.2012
(51) Int. Cl.: H01C 7/108, H01C 7/112, C08K 9/02

(54) **KÖRPER MIT SPANNUNGSBEGRENZENDER ZUSAMMENSETZUNG**
BODY WITH VOLTAGE-LIMITING COMPOSITION
CORPS AVEC UNE COMPOSITION LIMITANT LA TENSION

(30) Priorität: 26.07.2011 DE 102011079813
(43) Veröffentlichungstag der Anmeldung: 30.04.2014
(73) Patentinhaber: Siemens Aktiengesellschaft, 80333 München (DE)
(72) Erfinder: GRÖPPEL, Peter, 91052 Erlangen (DE); LANG, Steffen, 91352 Hallerndorf (DE)
(86) Internationale Anmeldenummer: PCT/EP2012/063811
(87) Internationale Veröffentlichungsnummer: WO 2013/014007

(56) Entgegenhaltungen:
- EP-A1- 0 639 625
- EP-A1- 0 944 097
- EP-A1- 1 585 146
- WO-A1-99/16841
- US-A- 6 143 405

## Beschreibung

Die Erfindung, die durch die Merkmale des Anspruchs 1 definiert ist, betrifft einen Körper, aufweisend eine spannungsbegrenzende Zusammensetzung, aufweisend eine Polymermatrix und einen teilleitfähiges Material enthaltenden partikelförmigen Füllstoff. Die Erfindung ist insbesondere vorteilhaft einsetzbar für Überspannungsableiter mit einer Varistoreigenschaft, insbesondere bei Mittelspannungsanlagen, Niederspannungsanlagen, Kabelverbindungen und Kabelverschlüssen.
Nichtlineare Widerstände mit einem Varistorverhalten finden sich in verschiedensten Anwendungen, wie in Überspannungsschutzeinrichtungen, in Kabelverbindungen, in Kabelendverschlüssen usw. Diese nichtlinearen Widerstände können eine Polymermatrix und einen in die Polymermatrix eingebetteten Füllstoff enthalten. Der Füllstoff enthält ein gesintertes Granulat mit überwiegend kugelförmigen Teilchen aus dotiertem Metalloxid (Metalloxid-Varistor (MOV)-Füllstoff). Die Partikel des Granulats bestehen aus kristallinen Körnerverbünden. Da ein Varistor mit einem Polymermatrix/MOV-Füllstoff-Kompositmaterial wesentlich einfacher herstellbar ist als ein vergleichbar wirkender Varistor auf der Basis einer Sinterkeramik, können Varistoren mit dem Kompositmaterial vergleichsweise einfach, preiswert und in großer Formenvielfalt hergestellt werden.

Im Folgenden wird in der Beschreibung durchgängig die Dichte fälschlicherweise in der Einheit "kg/m³" statt in der Einheit "kg/ dm³" angegeben. Die angegebene Einheit "kg/m³" ist also jeweils als 3 "kg/dm " zu verstehen.

Die Viskosität des Kompositmaterials steigt mit zunehmendem Füllstoffgehalt an, bis je nach Matrixmaterial und Verarbeitungsart eine praktische Obergrenze erreicht wird, z.B. von ca. 50 Gewichtsprozent bei Gießharzen. Bei Lacken und bei einer Herstellung von Prepregs wird die Viskosität des Kompositmaterials durch eine Zugabe von Lösungsmittel soweit erniedrigt, bis eine ideale Verarbeitbarkeit erreicht wird.

Aufgrund der hohen Dichte von dotierten Metalloxiden von typischerweise mehr als 5 kg/m³ und der relativ geringen Dichte des Kunststoffs der Kunststoffmatrix von ca. 0,8 bis 1,3 kg/m³ setzt sich der Füllstoff schnell ab, wodurch der maximale Füllgrad im System eingeschränkt wird oder eine bestimmte Verarbeitungsart praktisch unmöglich macht. So sind Lacke und Prepregs mit einer niedrigen Viskosität und teilleitfähigen Füllstoffen bisher praktisch nicht nutzbar.
WO 97/26693 beschreibt ein solches Polymermatrix/MOV-Füllstoff-Kompositmaterial. Als Füllstoff wird ein pulverförmiges Metalloxid-Granulat verwendet, welches durch Sintern eines sprühgetrockneten MOV-Pulvers auf der Basis eines mit Oxiden von Bi, Sb, Mn, Co, Al und/oder weiterer Metalle dotierten Zinkoxids erzeugt wird. Dieses Granulat weist nach Art eines Fußballs geformte, kugelförmige Teilchen mit einem Varistorverhalten auf. Die Teilchen weisen einen Durchmesser von bis zu 125 Mikrometern auf und sind in ihrer Größe gaussverteilt. Dieses Material wird in Kabelverbindungen und Kabelendverschlüssen eingesetzt und bildet dort spannungssteuernde Schichten.

WO99/16841 A1 offenbart eine weitere Zusammensetzung. Es ist die Aufgabe der vorliegenden Erfindung, die Nachteile des Standes der Technik zumindest teilweise zu überwinden und insbesondere eine besser verarbeitbare spannungsbegrenzende Zusammensetzung bereitzustellen.

Diese Aufgabe wird gemäß den Merkmalen des nabhängigen Anspruchs gelöst. Bevorzugte Ausführungsformen sind insbesondere den abhängigen Ansprüchen entnehmbar.

Die Aufgabe wird gelöst durch einen Körper, aufweisend eine spannungsbegrenzende Zusammensetzung, aufweisend eine Polymermatrix und einen teilleitfähiges Material enthaltenden partikelförmigen Füllstoff, wobei das teilleitfähige Material auf einem elektrisch nichtleitenden Trägermaterial aufgebracht ist und wobei das Trägermaterial eine geringere Dichte aufweist als das teilleitfähige Material.

Die einzelnen Partikel des Füllstoffs, welche sich also teilweise aus dem weniger dichten Trägermaterial und teilweise aus dem dichteren teilleitfähigen Material zusammensetzen, weisen also als Ganzes eine geringere mittlere Dichte auf als das teilleitfähige Material, insbesondere Metalloxid, alleine und setzen sich folglich in geringerem Maße innerhalb der Polymermatrix ab (verbessertes Absetzverhalten). Dadurch kann die Zusammensetzung gleichmäßiger mit einem höheren Füllstoffgehalt aufgebracht werden als bisher. Durch den höheren Füllstoffgehalt können deutlich höhere Stromdichten ausgehalten werden, bevor die Zusammensetzung degradiert. Auch kann nun eine Zusammensetzung zur Verwendung als Lack und/oder mit Prepregs bereitgestellt werden, welche einen ausreichend verteilten hohen Füllstoffgehalt über eine für praktische Anwendungen ausreichend lange Zeit hält.

Die Polymermatrix kann insbesondere elektrisch nichtleitend oder isolierend sein, insbesondere nach einem Aushärten o.ä.

Zur Bereitstellung der elektrischen Teilleitfähigkeit (Varistoreigenschaft) können die Partikel des Füllstoffs der spannungsbegrenzende Zusammensetzung insbesondere mindestens einen durch die spannungsbegrenzende Zusammensetzung hindurchführenden Leitungspfad bilden, wozu sich mehrere Teilchen mechanisch und elektrisch kontaktieren und so elektrisch leitfähige Cluster bilden. Üblicherweise wird sich ein solcher Leitungspfad bei einem geringen Anteil an leitfähigem Füllstoff in einer nicht leitfähigen Matrix nicht ausbilden, und ein spezifischer Widerstand der Zusammensetzung wird praktisch unendlich hoch sein. Mit steigendem Füllstoffanteil wird der spezifische Widerstand (im leitfähigen Zustand des Füllstoffs) sinken, bis er ab einer sog. Perkolationsgrenze oder Perkolationsschwelle im Wesentlichen konstant sein (die Zusammensetzung ist dann "perkolationsgesättigt"). Eine Erhöhung des Füllstoffanteils über die Perkolationsschwelle hinaus wird also keine signifikante Änderung des spezifischen Widerstands mehr ergeben und deutet auf eine sehr starke Ausbildung von elektrischen Leitungspfaden bzw. Clustern in der Matrix hin. Bei der vorliegenden spannungsbegrenzende Zusammensetzung (welche also insbesondere perkolationsgesättigt ist, d.h. einen Füllstoffanteil an oder über der Perkolationsschwelle aufweist) wird es bevorzugt, dass sie eine Perkolationsschwelle zwischen ca. 25 Gewichtsprozent und ca. 50 Gewichtsprozent des Füllstoffs aufweist. Jedoch kann die spannungsbegrenzende Zusammensetzung auch einen Füllstoffanteil unterhalb der Perkolationsschwelle aufweisen.

Es ist eine Weiterbildung, dass das teilleitfähige Material allseitig auf einem elektrisch nichtleitenden Trägermaterial aufgebracht ist. Dadurch wird eine elektrische Kontaktierung bei einer mechanischen Kontaktierung gewährleistet und eine Ausbildung eines elektrischen Leitungspfads unterstützt. Folglich kann so auch eine Perkolationsschwelle niedrig gehalten werden.

Das teilleitfähige Material des Füllstoffs kann insbesondere einen oder mehrere Verbindungshalbleiter, insbesondere dotierte Verbindungshalbleiter, umfassen.

Es ist eine Ausgestaltung, dass das teilleitfähige Material mindestens ein dotiertes Metalloxid aufweist. Als Dotierung können insbesondere Bi, Sb, Mn, Co, Al und/oder anderer Metalle, deren Oxide, oder z.B. auch Fluor (F) vorgesehen sein. Alternativ oder zusätzlich mag das teilleitfähige Material z.B. III-IV-Verbindungshalbleiter, andere II-VI-Verbindungshalbleiter, III-VI-Verbindungshalbleiter, I-III-VI-Verbindungshalbleiter, IV-IV-Verbindungshalbleiter (wie z.B. SiC), organische Halbleiter usw. aufweisen.

Es ist ferner eine Ausgestaltung, dass das dotierte Metalloxid dotiertes Zinnoxid und/oder dotiertes Zinkoxid umfasst. Diese Metalloxide weisen eine gute spannungsbegrenzende oder Varistor-Eigenschaft auf. Zinnoxid und Zinkoxid weisen vergleichsweise hohe Dichten von ca. 6,9 kg·m⁻³ bzw. von ca. 5,6 kg·m⁻³ auf.

Es ist noch eine Ausgestaltung, dass das Trägermaterial eine Dichte von weniger als 3,5 kg·m⁻³, insbesondere von weniger als 3,0 kg·m⁻³, aufweist. So kann ein hoher Dichteunterschied gegenüber dem teilleitfähigen Material, insbesondere Metalloxiden, gewährleistet werden. Solche Trägermaterialien umfassen beispielsweise Bornitrid, Quarz, Siliziumkarbid, Siliziumnitrid oder Schichtsilikate.

Es ist noch eine weitere Ausgestaltung, dass das Trägermaterial ein Schichtsilikat ist. Schichtsilikate, insbesondere Glimmer, weisen außer ihrer geringen Dichte den Vorteil auf, dass sie typischerweise nur eine geringe elektrische Leitfähigkeit aufweisen.

Speziell Glimmer weist eine perfekte Spaltbarkeit parallel zu seinen Schichtpaketen auf und weist ferner eine besonders geringe elektrische Leitfähigkeit auf. Glimmer weist auch eine besonders geringe Dichte von ca. 2,7 kg·m⁻³ auf. Der Glimmer kann beispielsweise Muskovit oder Biotit sein. Insbesondere die Schichtsilikate, und darunter besonders Glimmer, weisen den weiteren Vorteil auf, dass sie auch als kleine Teilchen oder Partikel, z.B. auch in Pulverform, eine flache Grundform aufweisen. Ein kleines Teilchen oder Partikel mit einem (insbesondere allseitig) auf einem Schichtsilikat aufgebrachten teilleitfähigen Material ist folglich nicht sphärisch, sondern eher plättchenförmig. Diese Plättchenform verlangsamt ein Absetzen weiter, da sie einer Bewegung in der Polymermatrix einen höheren Strömungswiderstand entgegensetzt als ein sphärisches Teilchen.

Es ist noch eine weitere Ausgestaltung, dass das Trägermaterial ein keramisches Trägermaterial, z.B. Glimmer, ist. Das keramische Trägermaterial weist den Vorteil auf, dass es mechanisch hochfest und chemisch hochgradig inert ist und zudem als ein elektrischer Isolator ausgewählt werden kann.

Es ist ferner eine Ausgestaltung, dass der partikelförmige Füllstoff durch Glühen hergestellt worden ist, insbesondere mit dem keramischen Trägermaterial. Das keramische Trägermaterial weist dabei den Vorteil auf, dass es hochtemperaturfest ist und das Glühen ohne Schaden überstehen kann.

Es ist eine Weiterbildung, dass das teilleitfähige Material, insbesondere Metalloxid, als solches oder in einer Vorform (z.B. in einer noch nicht oxidierten Vorform und/oder mit Zusatz von bei einem Glühen entfernten Hilfsstoffen) auf dem Trägermaterial abgeschieden und dann mit dem Trägermaterial geglüht worden ist. Das Trägermaterial kann z.B. als ein Pulver vorliegen. So können fest zusammenhängende Partikel erzeugt werden, wobei das keramische Trägermaterial eine für ein Glühen ausreichend hohe Temperaturbeständigkeit aufweist. Beispielsweise kann das teilleitfähige Material, insbesondere dotiertes Metalloxid, als solches oder in der Vorform insbesondere mittels eines nasschemischen Verfahrens auf dem Trägermaterial abgeschieden worden sein. Insbesondere mag z.B. Zinn oder Zink bzw. eine Verbindung davon zusammen mit Bi, Sb, Mn, Co, Al usw. und ggf. mit Hilfsstoffen nasschemisch auf Glimmer abgeschieden werden und durch das Glühen oxidiert werden. Die Hilfsstoffe werden dabei ausgeglüht.

Es ist noch eine weitere Ausgestaltung, dass die Polymermatrix ein spritzgussfähiges Polymer aufweist. So kann mittels der Zusammensetzung auf eine einfache Weise ein spannungsbegrenzender Kunststoffkörper, insbesondere Vollkörper, mit einer Varistor-Eigenschaft bereitgestellt werden.

Es ist noch eine Weiterbildung, dass die Zusammensetzung fließfähig ist, z.B. durch ein Zusetzen von Lösungsmittel. Die Zusammensetzung kann so insbesondere als ein Lack o.ä. mit einer Varistor-Eigenschaft verwendet werden.

Es ist zudem eine Ausgestaltung, dass die Polymermatrix Duroplast und/oder Thermoplast aufweist. Diese Polymere lassen sich besonders gut zur Herstellung von Kunststoffkörpern verwenden, insbesondere durch ein Spritzgussverfahren.

Der partikelförmige Füllstoff weist eine Breite zwischen 5 Mikrometern und 70 Mikrometern auf und die einzelnen Teilchen oder Partikel des partikelförmigen Füllstoffs können insbesondere eine häufigste Breite zwischen 5 Mikrometern und 70 Mikrometern aufweisen. Es wird besonders bevorzugt, dass eine Abweichung (d95) von der häufigsten Breite +/- 5 Mikrometer beträgt.

Eine Dicke der Partikel liegt zwischen 300 Nanometern und 600 Nanometern. Insbesondere kann eine Dicke des Trägers zwischen 200 Nanometern und 300 Nanometern liegen. Das dotierte Metalloxid kann mit einer Dicke von bevorzugt jeweils zwischen 100 Nanometern und 150 Nanometern vorliegen.

Die Aufgabe wird gelöst durch einen Körper, der die spannungsbegrenzende Zusammensetzung wie oben beschrieben aufweist.
Dieser Körper weist den Vorteil auf, dass er ganz oder teilweise die spannungsbegrenzende Zusammensetzung aufweist, welche einen höheren und/oder gleichmäßiger verteilten Füllstoffanteil an teilleitfähigem Material, insbesondere an dotiertem Metalloxid, aufweist als herkömmliche spannungsbegrenzende Zusammensetzungen. Dadurch wird ein gleichmäßigeres Varistorverhalten ermöglicht. Zudem wird so ein Körper bereitgestellt, welcher deutlich höhere Stromdichten aushalten kann, bevor er in seiner Funktion als Varistor degradiert. Dies ermöglicht einen bezüglich eines Stromflusses besonders langlebigen und betriebssicheren Varistor-Körper.
Es ist eine Ausgestaltung, dass der Körper mindestens eine Schicht aus der spannungsbegrenzenden Zusammensetzung aufweist. Ein solcher Körper weist insbesondere den Vorteil auf, dass seine die Schicht tragende Grundform herkömmlich herstellbar ist und dann mindestens eine Schicht aus oder mit der spannungsbegrenzenden Zusammensetzung auftragbar ist. Dabei wird es mittels der spannungsbegrenzenden Zusammensetzung erstmals ermöglicht, auch Lacke mit der spannungsbegrenzenden Zusammensetzung bzw. die spannungsbegrenzende Zusammensetzung als Lack o.ä. praktisch zu verwenden. Denn die Partikel setzen sich ausreichend langsam ab, so dass der Lack (z.B. nach einem zuvor erfolgten Schütteln) mit einem hohen und ausreichend gleichmäßigen Füllstoffanteil mit herkömmlichen Methoden (Pinseln, Aufsprühen usw.) aufgebracht werden kann. Bei Lacken lassen sich mit der spannungsbegrenzenden Zusammensetzung Füllstoffanteile von bis zu 90 Gewichtsprozent erreichen.

Es ist noch eine Ausgestaltung, dass der Körper einen aus der spannungsbegrenzenden Zusammensetzung hergestellten Grundkörper aufweist oder ist. Der Körper kann insbesondere nur aus dem Grundkörper bestehen. So kann auch ein besonders langlebiger und betriebssicherer Varistor-Vollkörper bereitgestellt werden.

Es ist noch eine Ausgestaltung, dass der Körper eine faserverstärkte Zusammensetzung aufweist oder ist. Insbesondere kann der Körper die faserverstärkte Zusammensetzung als ein Prepreg-Halbzeug oder als ein anderes Halbzeug mit einer Matrix aus der Zusammensetzung und Fasern zu deren Verstärkung vorliegen. Es ist also mittels der spannungsbegrenzenden Zusammensetzung erstmals möglich, auch Prepregs usw. mit der spannungsbegrenzenden Zusammensetzung auszustatten, insbesondere mit der spannungsbegrenzenden Zusammensetzung als dem Matrixmaterial des Prepregs. Insbesondere können nun Fasern des Prepregs mit einer spannungsbegrenzenden Zusammensetzung mit einem hohen und ausreichend gleichmäßigen Füllstoffanteil getränkt bzw. damit verbunden werden. Unter einem Prepreg mag insbesondere ein endlosfaserverstärktes duroplastisches Halbzeug verstanden werden. Jedoch ist die Erfindung nicht auf eine Verwendung von Endlosfasern beschränkt, sondern kann z.B. auch mit duroplastischen Faser-Matrix-Halbzeugen wie BMC (Bulk Molding Compound) oder SMC (Sheet Molding Compound), welche nur kurze Fasern aufweisen, verwendet werden. Das Duroplast des Prepregs oder eines anderen Faser-Matrix-Halbzeugs kann folglich eine spannungsbegrenzende Zusammensetzung mit einer duroplastischen Polymermatrix sein. Für Prepregs oder andere Faser-Matrix-Halbzeuge lassen sich in der spannungsbegrenzenden Zusammensetzung Füllstoffanteile von bis zu 70 Gewichtsprozent erreichen. Die Ausgestaltung ist jedoch nicht auf Duroplaste beschränkt.

Offenbart ist auch ein Verfahren zum Herstellen einer spannungsbegrenzenden Zusammensetzung aus einer Polymermatrix und einem teilleitfähiges Material enthaltenden partikelförmigen Füllstoff, wobei das Verfahren ein Glühen zum Herstellen des partikelförmigen Füllstoffs mit dem teilleitfähigen Material aufgebracht auf einem leichteren, elektrisch nichtleitenden, insbesondere keramischen, Trägermaterial umfasst. Das Verfahren ergibt die gleichen Vorteile wie die oben beschriebene Zusammensetzung und kann auch analog ausgestaltet werden.
Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung von Ausführungsbeispielen, die im Zusammenhang mit den Zeichnungen näher erläutert werden. Dabei können zur Übersichtlichkeit gleiche oder gleichwirkende Elemente mit gleichen Bezugszeichen versehen sein.
- Fig.1: zeigt eine erfindungsgemäße spannungsbegrenzende Zusammensetzung;
- Fig.2: zeigt einen Körper mit einer Schicht aus der spannungsbegrenzenden Zusammensetzung;
- Fig.3: zeigt einen Körper mit einem aus der spannungsbegrenzenden Zusammensetzung hergestellten Grundkörper; und
- Fig.4: zeigt einen Körper in Form eines Prepreg-Halbzeugs mit einer faserverstärkten spannungsbegrenzenden Zusammensetzung.

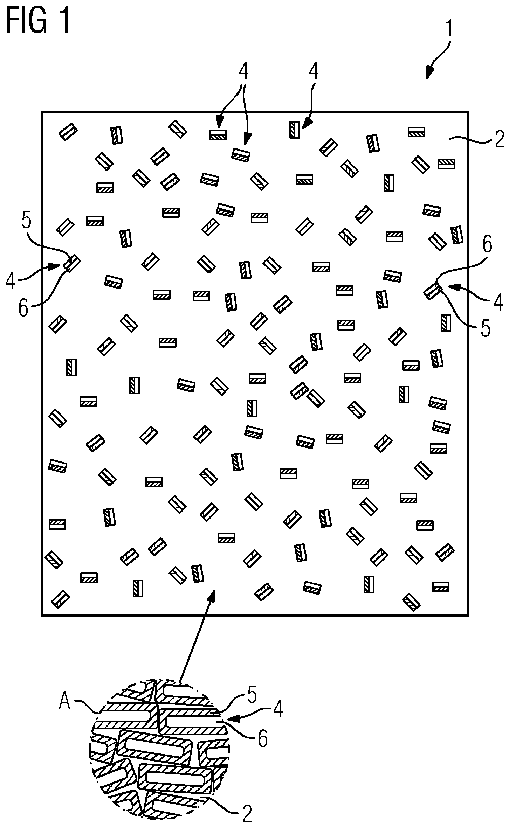

Fig.1 zeigt eine erfindungsgemäße spannungsbegrenzende Zusammensetzung 1. Die spannungsbegrenzende Zusammensetzung 1 weist eine elektrisch nicht leitfähige Polymermatrix 2 mit einem oder mehreren elektrisch nicht leitfähigen duroplastischen Polymeren auf. Die Polymermatrix 2 mag noch weitere Materialien oder Stoffe aufweisen, z.B. Lösungsmittel oder Verdünnungsmittel.

Die Polymermatrix 2 ist mit einem partikelförmigen Füllstoff versetzt, welcher pulverförmige, teilleitfähige Partikel 4 aufweist. Diese spannungsbegrenzende Zusammensetzung 1 wirkt als ein Varistor bzw. weist eine Varistor-Funktion oder Varistor-Eigenschaft auf, d.h., dass die spannungsbegrenzende Zusammensetzung 1 bis zu einer daran angelegten Schwellspannung im Wesentlichen elektrisch nichtleitend ist und mit Erreichen oder Überschreiten der Schwellspannung im Wesentlichen plötzlich leitet. Die spannungsbegrenzende Zusammensetzung 1 kann also z.B. zum Überspannungsschutz verwendet werden.

Die Partikel 4 liegen dergestalt als Verbundmaterial ("Verbundpartikel") vor, dass ein teilleitfähiges Material in Form eines dotierten Metalloxids 5 auf einem Träger oder Trägermaterial 6 aus Glimmer, z.B. Muskovit, aufliegt. Das dotierte Metalloxid 5 ist hier ein mit einem Oxid von Bi, Sb, Mn, Co und/oder Al dotiertes Zinnoxid oder Zinkoxid. Während Zinnoxid und Zinkoxid eine hohe Dichte von ca. 6,9 kg·m⁻³ bzw. von ca. 5,6 kg·m⁻³ aufweisen, weist Glimmer eine vergleichsweise geringe Dichte von ca. 2,7 kg·m⁻³ auf. Glimmer ist zudem ausgeprägt elektrisch nichtleitend. Die Partikel 4 weisen also eine effektive mittlere Dichte auf, welche sich aus einer gewichteten Mittelung der Dichten des dotierten Metalloxids 5 und des Trägers 6 aus Glimmer ergibt. Die Partikel 4 sind folglich leichter als reines dotiertes Metalloxid und sinken in der Polymermatrix 2 erheblich langsamer zu Boden. Der Träger 6 wirkt also als ein "Auftriebskörper" für das Metalloxid.
Das Absinken der Partikel 4 wird dadurch noch weiter verlangsamt oder sogar aufgehalten, dass die Partikel 4 aufgrund des im Wesentlichen planaren Trägers 6 aus Glimmer keine sphärische Form, sondern eine Plättchenform aufweisen. Die Plättchenform vergrößert einen Strömungswiderstand und verringert somit die Absenkgeschwindigkeit. So lassen sich die Partikel 4 auch in einer vergleichsweise flüssigen Polymermatrix 2 ausreichend lange verteilen, um eine Aufbringung der spannungsbegrenzende Zusammensetzung 1 mit einem ausreichend hohen Füllstoffgehalt zu ermöglichen. Die spannungsbegrenzende Zusammensetzung 1 ist folglich auch als ein Lack oder ein Harz eines faserverstärkten Kunststoffs einsetzbar.
Die Partikel 4 können insbesondere so hergestellt worden sein, dass mit Bi, Sb, Mn, Co und/oder Al dotiertes Zinn oder Zink auf pulverförmigem Glimmer nasschemisch abgeschieden wird und dann mit dem Glimmer geglüht wird, wobei während des Glühens die Oxide gebildet werden. Die Partikel 4 können insbesondere eine häufigste Breite zwischen 5 Mikrometern und 15 Mikrometern aufweisen, insbesondere zwischen 7 Mikrometern und 9 Mikrometern. Eine Dicke der Partikel 4 liegt zwischen 300 Nanometern und 600 Nanometern. Insbesondere kann eine Dicke des Trägers oder Trägermaterials 6 zwischen 200 Nanometern und 300 Nanometern liegen und beidseitig das dotierte Metalloxid 5 mit einer Dicke von jeweils zwischen 100 Nanometern und 150 Nanometern vorliegen.
Obwohl die Partikel 4 für eine gute Übersichtlichkeit so gezeichnet sind, dass sie sich nicht berühren, ist die spannungsbegrenzende Zusammensetzung 1 tatsächlich perkolationsgesättigt, wie vergrößert in Ausschnitt A skizziert. Die Partikel 4 sind hier lokal im Wesentlichen gleichgerichtet angeordnet, und nächste Nachbarn der Partikel 4 berühren sich in der Regel (Clusterbildung). Dadurch wird eine sehr verlässliche Ausbildung von elektrischen Leitungspfaden und damit eine verlässliche Varistorfunktion ermöglicht. Das Metalloxid 5 umgibt dazu den Träger 6 insbesondere allseitig.

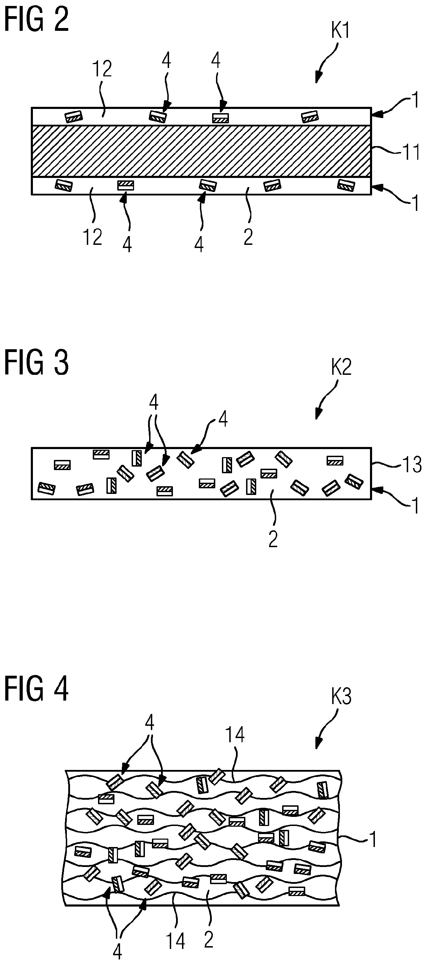

Fig.2 zeigt einen Körper K1 mit einer Schicht aus der spannungsbegrenzenden Zusammensetzung 1. Der Körper K1 weist einen Grundkörper 11 aus einem elektrisch nichtleitenden Material (z.B. Kunststoff oder Keramik) auf, wobei der Grundkörper 11 an seiner Oberfläche mit einer Schicht 12 aus der spannungsbegrenzenden Zusammensetzung 1 belegt ist. Wird an diesen Körper K1 eine Spannung angelegt, wirkt er bis zum Erreichen der Schwellspannung des dotierten Metalloxids 5 als Nichtleiter. Mit Erreichen oder Überschreiten der Schwellspannung leitet das dotierte Metalloxid 5. Der Körper K1 wirkt folglich wie ein Varistor. Die spannungsbegrenzende Zusammensetzung 1 kann beispielsweise als Lack auf den Grundkörper 11 aufgepinselt oder aufgesprüht worden sein. Hierbei kann ein Gewichtsanteil des Füllstoffs 4 bis zu ca. 90 Gewichtsprozent betragen.

Fig.3 zeigt einen Körper K2 mit einem aus der spannungsbegrenzenden Zusammensetzung 1 hergestellten Grundkörper 13. Hier wirkt also der Grundkörper 13 als Varistor. Die spannungsbegrenzende Zusammensetzung 1 kann zur Herstellung des Grundkörpers 13 beispielsweise spritzgegossen worden sein. Die Polymermatrix 2 bzw. das mindestens eine zugehörige Polymer ist also ebenfalls spritzgussfähig.

Fig.4 zeigt einen Körper in Form einer Prepreglage K3 mit einer faserverstärkten spannungsbegrenzenden Zusammensetzung 1. Die zugehörigen, mit der spannungsbegrenzenden Zusammensetzung 1 getränkten Endlosfasern 14 können elektrisch leitend oder elektrisch nichtleitend sein. Hier wirkt also die Prepreglage K3 als Varistor oder Varistor-Ausgangsmaterial. Die Prepreglage K3 kann einen Gewichtsanteil des Füllstoffs 4 von bis zu ca. 70 Gewichtsprozent aufweisen. Eine solche Prepreglage K3 kann beispielsweise um einen Grundkörper gewickelt werden oder sein.

Obwohl die Erfindung im Detail durch die gezeigten Ausführungsbeispiele näher illustriert und beschrieben wurde, so ist die Erfindung nicht darauf eingeschränkt und andere Variationen können vom Fachmann hieraus abgeleitet werden, ohne den Schutzumfang der Erfindung gemäß Anspruch 1 zu verlassen

## Patentansprüche

1. Körper (K1; K2; K3) mit Varistoreigenschaften für Überspannungsableiter, insbesondere bei Mittelspannungsanlagen, Niederspannungsanlagen, Kabelverbindungen und Kabelverschlüssen, und aufweisend eine spannungsbegrenzende Zusammensetzung (1), die eine Polymermatrix (2) und
- einen teilleitfähiges Material (5) enthaltenden partikelförmigen Füllstoff (4) aufweist, wobei
- das teilleitfähige Material (5) auf einem elektrisch nichtleitenden Trägermaterial (6) aufgebracht ist und
- das Trägermaterial (6) eine geringere Dichte aufweist als das teilleitfähige Material (5)
- wobei der partikelförmige Füllstoff aus dem teilleitfähigen Material (5) und dem Trägermaterial (6) eine Breite zwischen 5 Mikrometern und 70 Mikrometer bei einer Dicke zwischen 300 Nanometern und 600 Nanometern aufweist.

2. Körper (K1) nach Anspruch 1, **dadurch gekennzeichnet, dass** der Körper (K1) mindestens eine Schicht (12) aus der spannungsbegrenzenden Zusammensetzung (1)aufweist.

3. Körper (K2) nach Anspruch 1, **dadurch gekennzeichnet, dass** der Körper (K2) einen aus der spannungsbegrenzenden Zusammensetzung (1) hergestellten Grundkörper (13) aufweist.

4. Körper (K3) nach Anspruch 1, **dadurch gekennzeichnet, dass** der Körper (K3) eine faserverstärkte Zusammensetzung aufweist.

5. Körper (K1; K2; K3) nach einem der Ansprüche 1 bis 4, **dadurch gekennzeichnet, dass** in der spannungsbegrenzenden Zusammensetzung das Trägermaterial (6) eine Dichte von weniger als 3,5 kg*dm⁻³ insbesondere von weniger als 3,0 kg*dm⁻³, aufweist.

6. Körper (K1; K2; K3) nach einem der Ansprüche 1 bis 5, **dadurch gekennzeichnet, dass** in der spannungsbegrenzenden Zusammensetzung (1) das Trägermaterial (6) ein keramisches Trägermaterial ist und der partikelförmige Füllstoff (4) durch Glühen hergestellt worden ist.

7. Körper (K1; K2; K3) nach einem der Ansprüche 1 bis 6, **dadurch gekennzeichnet, dass** in der spannungsbegrenzenden Zusammensetzung (1) die Polymermatrix (2) ein spritzgussfähiges Polymer aufweist.

8. Körper (K1) nach einem der Ansprüche 1, 2, wobei die spannungsbegrenzende Zusammensetzung als Lack vorliegt mit einem Füllstoffanteil von bis zu 90 Gewichtsprozenten

9. Körper (K2; K3) nach Anspruch 4, wobei der aus der spannungsbegrenzenden Zusammensetzung hergestellte Grundkörper einen Füllstoffanteil von bis zu 70 Gewichtsprozenten aufweist.

## Claims

1. Body (K1; K2; K3) with varistor properties for surge arresters, in particular in medium-voltage systems, low-voltage systems, cable connections and cable fasteners, and having a voltage-limiting composition (1) which comprises a polymer matrix (2) and a particulate filler (4) containing partially conductive material (5), wherein
- the partially conductive material (5) is applied to an electrically non-conductive carrier material (6) and
- the carrier material (6) has a lower density than the partially conductive material (5),
- wherein the particulate filler comprising the partially conductive material (5) and the carrier material (6) has a width of between 5 micrometres and 70 micrometres at a thickness of between 300 nanometres and 600 nanometres.

2. Body (K1) according to Claim 1, **characterized in that** the body (K1) has at least one layer (12) of the voltage-limiting composition (1).

3. Body (K2) according to Claim 1, **characterized in that** the body (K2) has a basic body (13) produced from the voltage-limiting composition (1).

4. Body (K3) according to Claim 1, **characterized in that** the body (K3) has a fiber-reinforced composition.

5. Body (K1; K2; K3) according to one of Claims 1 to 4, **characterized in that**, in the voltage-limiting composition, the carrier material (6) has a density of less than 3.5 kg*dm⁻³, in particular of less than 3.0 kg*dm⁻³.

6. Body (K1; K2; K3) according to one of Claims 1 to 5, **characterized in that**, in the voltage-limiting composition (1), the carrier material (6) is a ceramic carrier material and the particulate filler (4) has been produced by annealing.

7. Body (K1; K2; K3) according to one of Claims 1 to 6, **characterized in that**, in the voltage-limiting composition (1), the polymer matrix (2) has an injection-moldable polymer.

8. Body (K1) according to one of Claims 1, 2,
wherein the voltage-limiting composition is in the form of a lacquer with a filler content of up to 90 percent by weight.

9. Body (K2; K3) according to Claim 4,
wherein the basic body produced from the voltage-limiting composition has a filler content of up to 70 percent by weight.

## Revendications

1. Corps (K1 ; K2 ; K3) possédant des propriétés de varistor pour des parafoudres, en particulier dans le cadre d'installations de moyenne tension, d'installations de basse tension, de raccords de câbles et de fermetures de câbles, et présentant une composition (1) limitant la tension qui présente une matrice polymère (2) et une matière de charge particulaire (4) contenant une matière partiellement conductrice (5) ; dans lequel :
- la matière partiellement conductrice (5) est appliquée sur une matière de support non électroconductrice (6) ; et
- la matière de support (6) présente une masse volumique inférieure à celle de la matière partiellement conductrice (5);
- dans lequel la matière de charge particulaire à partir de la matière partiellement conductrice (5) et de la matière de support (6) présente une largeur entre 5 µm et 70 µm avec une épaisseur entre 300 nm et 600 nm.

2. Corps (K1) selon la revendication 1, **caractérisé en ce que** le corps (K1) présente au moins une couche (12) réalisée à partir de la composition (1) limitant la tension.

3. Corps (K2) selon la revendication 1, **caractérisé en ce que** le corps (K2) présente un corps de base (13) fabriqué à partir de la composition (1) limitant la tension.

4. Corps (K3) selon la revendication 1, **caractérisé en ce que** le corps (K3) présente une composition renforcée par des fibres.

5. Corps (K1 ; K2 ; K3) selon l'une quelconque des revendications 1 à 4, **caractérisé en ce que**, dans la composition limitant la tension, la matière de support (6) présente une masse volumique inférieure à 3,5 kg*dm⁻³, en particulier inférieure à 3,0 kg*dm⁻³.

6. Corps (K1 ; K2 ; K3) selon l'une quelconque des revendications 1 à 5, **caractérisé en ce que**, dans la composition (1) limitant la tension, la matière de support (6) est une matière de support céramique et la matière de charge particulaire (4) a été fabriquée par calcination.

7. Corps (K1 ; K2 ; K3) selon l'une quelconque des revendications 1 à 6, **caractérisé en ce que**, dans la composition (1) limitant la tension, la matrice polymère (2) présente un polymère apte à un moulage par injection.

8. Corps (K1) selon l'une quelconque des revendications 1, 2, dans lequel la composition limitant la tension est présente sous la forme d'un vernis dont la fraction de matière de charge s'élève jusqu'à 90 % en poids.

9. Corps (K2 ; K3) selon la revendication 4, dans lequel le corps de base fabriqué à partir de la composition limitant la tension présente une fraction de matière de charge s'élevant jusqu'à 70 % en poids.
